# EUROPÄISCHE PATENTANMELDUNG

(11) **EP 1 455 161 A1**
(43) Veröffentlichungstag der Anmeldung: **08.09.2004**
(21) Anmeldenummer: 04005207.8
(22) Anmeldetag: 05.03.2004
(51) Int. Cl.: G01B 5/255, G01B 7/315

(54) **Vorrichtung zur Montage eines Achsmesskopfes am Fahrzeugrad**

(30) Priorität: 07.03.2003 DE 10310408
(71) Anmelder: att Automotive Testing Technologies GmbH, 77694 Kehl-Auenheim (DE)
(72) Erfinder: Nussbaum, Steffen, 76530 Baden-Baden (DE); Vauderwange, Thomas, 77656 Offenburg (DE)
(74) Vertreter: Brommer, Hans Joachim, Dr.-Ing.

(57) **Zusammenfassung**

Die Erfindung betrifft einen Magnethalter zur Montage eines Achsmesskopfes (9) am Fahrzeugrad, wobei der Magnethalter zumindest drei Finger (4a, 4b, 4c, 4d) mit Magneten (5a, 5b, 5c, 5d) aufweist, die mit dem Rad, vorzugsweise den Radmuttern bzw. Radschrauben in Anlage bringbar sind und magnetisch daran haften. Wesentlich dabei ist, dass der Magnethalter zumindest einen dezentral positionierten Griff (2, 3, 8) aufweist, der durch einseitiges Abkippen des Magnethalters sein Lösen aus der Magnetverbindung gestattet.

## Beschreibung

Die Erfindung betrifft einen Magnethalter zur Montage eines Achsmesskopfes am Fahrzeugrad, wobei der Magnethalter zumindest drei Finger aufweist, die mit dem Rad, vorzugsweise den Radmuttern bzw. Radschrauben in Anlage bringbar sind und magnetisch daran haften.

Für die Achsvermessung müssen elektronische Achsmessköpfe an den Rädern montiert werden. Hierzu dienen sogenannte Spannhalter, die seitlich vorstehende Greifarme aufweisen, mit denen der Halter für den Achsmesskopf am Reifen verspannt wird. Damit der Halter dabei eine definierte Position einnimmt, wird er zuvor so ausgerichtet, dass seine Finger sich entweder am äußeren Felgenbereich oder an den Radschrauben abstützen. Die Finger sind dazu verstellbar an dem Halter gelagert, damit sie an unterschiedliche Radgrößen angepasst werden können.

Das Anbringen dieser Montagevorrichtung ist etwas problematisch, weil einerseits die Finger auf die Rad-Auflagepunkte ausgerichtet werden müssen, andererseits aber auch die seitlichen Greifarme über den Reifen geschoben und am Profil verspannt werden müssen. Es sind also zwei Ausrichtvorgänge gleichzeitig durchzuführen.

Zur Montageerleichterung ist bereits vorgeschlagen worden, die Finger an ihren freien Enden mit kleinen Magnetplättchen zu versehen, die als Positionierhilfe dienen sollen. Grundsätzlich bleibt aber das Problem, sowohl die Finger richtig aufzusetzen, als auch gleichzeitig die Greifarme am Reifen zu verspannen.

Außerdem ist durch die DE 100 23 385 eine Magnethalterung für ein Achsmessgerät bekannt geworden, das axial verstellbare Magnetfinger aufweist, mit denen der Magnethalter auf die Radschrauben aufgesetzt wird. Dieser Magnethalter braucht zwar keine zusätzlichen Greifarme zur Verspannung am Reifen; dafür sind aber Zentrierstifte notwendig, die jeweils in passende Zentrierbohrungen am Rad eingesteckt werden müssen. Solche Zentrierbohrungen sind nicht an allen Fahrzeugrädern vorhanden, so dass der Einsatz dieser bekannten Magnethalter nicht universell möglich ist. Über dies wird die Handhabung des Magnethalters erschwert, weil seine Magnete nicht nur passgenau auf die Radschrauben aufgesetzt, sondern gleichzeitig auch noch die Zentrierstifte in die entsprechenden Zentrierbohrungen des Rades eingeführt werden müssen.

Hiervon ausgehend liegt die Aufgabe der vorliegenden Erfindung darin, die Montagevorrichtung für die Achsmessköpfe dahingehend zu verbessern, dass sie leichter und schneller als bisher am Rad montiert und demontiert werden kann, gleichwohl aber eine stabile Fixierung gewährleistet ist. Nicht zuletzt soll sich die erfindungsgemäße Konstruktion durch einen kostengünstigen Aufbau auszeichnen.

Diese Aufgabe wird erfindungsgemäß dadurch gelöst, dass der Magnethalter zumindest einen dezentral positionierten Griff aufweist, der durch einseitiges Abkippen des Magnethalters sein Lösen aus der Magnetverbindung mit dem Rad bzw. den Radmuttern bzw. Radschrauben gestattet.

Dadurch können wesentlich stärkere Magnete als bisher eingesetzt werden, insbesondere sogenannte Stabgreifer-Magnete, die die alleinige Befestigung des Magnethalters am Rad bewirken, ohne an der Felge oder am Reifen angreifende Spannarme und ohne Zentrierstifte. Die hohe Magnetkraft, die den mehrere Kilogramm schweren elektronischen Achsmesskopf tragen muss und die das Lösen des Magnethalters vom Fahrzeugrad außerordentlich erschwert, wird also erfindungsgemäß dadurch überwunden, dass der Magnethalter durch die seitlich abstehenden Griffe einem Kippmoment unterworfen werden kann, das zunächst zum einseitigen Lösen der Magnetverbindung führt, worauf es dann nicht mehr schwierig ist, auch die Magnetverbindung an der anderen Seite des Magnethalters zu lösen.

Außerdem wird der bisher übliche zweite Montageschritt, nämlich die Verspannung der Greifarme am Reifen bzw. das Einfädeln der Zentrierstifte eingespart, und die Handhabung des erfindungsgemäßen Magnethalters auch allgemein erleichtert und beschleunigt.

Besonders zweckmäßig ist es, dass der zumindest eine Griff radial außerhalb des Radmutter- bzw. Radschrauben-Kranzes angeordnet ist, weil man dadurch einen größeren Hebelarm zur Verfügung hat, um das erwünschte einseitige Aufbrechen der Magnetverbindung durchzuführen.

Dabei empfiehlt es sich, dass der zumindest eine Griff am äußeren Rand des Magnethalters angeordnet ist und etwa senkrecht zur Radachse, also etwa parallel zur Radebene verläuft, wobei die Länge der die Magnete aufweisenden Finger so zur Griffposition zu bemessen ist, dass der Griff bzw. die Griffe von der Bedienungsperson bequem umfasst werden können.

Eine geschickte Bauweise ergibt sich dadurch, dass der Griff teleskopartig ausfahrbar am Magnethalter gelagert ist. Man erzielt dadurch einen großen Hebelarm, kann aber den bzw. die Griffe bei Nichtgebrauch nach innen zurückschieben, so dass sie nicht im Weg stehen.

Besonders günstig ist es, wenn zwei Griffe an entgegengesetzten Seiten des Magnethalters angeordnet sind, weil dann an der einen Seite gedrückt, an der anderen Seite gezogen werden kann.

Hinsichtlich der konstruktiven Ausgestaltung der Griffe bieten sich verschiedene Möglichkeiten. Grundsätzlich genügen stangenähnliche Teile, die aber noch eine gummielastische Ummantelung aufweisen sollten. Die Griffe können an ihren äußeren Enden frei auslaufen, ebenso aber auch in einen gemeinsamen Rahmen, insbesondere in einen gemeinsam umlaufenden Ring münden. Ein derartiger Rahmen oder Ring erleichtert die Zugriffsmöglichkeiten aus unterschiedlichen Richtungen wie auch das Hin- und Hertragen des Magnethalters.

Hinsichtlich der konkreten Ausbildung der Stabgreifer-Magnete empfiehlt es sich, dass sie eine zylindrische Form aufweisen und ihre Achse etwa parallel zur Radachse verläuft, d. h. dass sie mit ihrer Stirnseite in Kontakt mit der gegenüber liegenden Stirnseite der Radmutter oder Radschraube kommen. Man kann dadurch unabhängig von der Größe der Radmuttern bzw. Radschrauben stets die gleichen Stabgreifer-Magnete verwenden. Die genannte Stirnseite ist vorzugsweise plan, um mehr Bewegungsfreiheit beim Aufsetzen auf die Radmuttern bzw. Schrauben zu haben. Es ist aber stattdessen auch eine topfförmige Gestaltung der Magnete möglich. Außerdem können die Magnete durch Distanzstücke axial verlängert werden.

Als Material für die Stabgreifer-Magnete eignet sich insbesondere eine Legierung aus Neodym, Eisen und Bor. Zweckmäßig sind die Magnete so ausgebildet, dass sie an ihrem dem Rad zugewandten freien Ende beide Pole aufweisen, dort also als Dipol ausgebildet sind, wogegen ihr anderes Ende magnetisch neutral sein kann.

Eine weitere Besonderheit besteht darin, dass die genannten Finger jeweils eine Befestigungsvorrichtung aufweisen, damit sie in ihrer auf die Radmuttern bzw. Radschrauben ausgerichteten Position absolut ortsfest gehalten sind. Diese Fixierung der Finger ist bei den herkömmlichen Montagevorrichtungen mit seitlichen Greifarmen nicht notwendig, weil dort das Gewicht des Messkopfes im Wesentlichen von den Greifarmen bzw. der von ihnen ausgelösten Verspannung der Finger gegenüber der Felge bewirkt wird.

Für die Fixierung der Finger bieten sich dem Fachmann verschiedene Möglichkeiten. Es empfiehlt sich eine vorzugsweise in Axialrichtung der Finger wirkende Verspannung, damit die Finger bei der Fixierung keine Querverschiebung durchmachen. Im einfachsten Fall werden sie an ihrer Montagevorrichtung festgeschraubt; ebenso kommt aber auch ein Bajonett-Verschluss, Federschnapper oder dergleichen in Betracht.

Zur Verringerung des Herstellungsaufwandes empfiehlt es sich, dass die Finger insgesamt als Stabgreifer-Magnete ausgebildet sind, etwa indem sie an ihrem dem Rad abgewandten Ende die genannte Befestigungsvorrichtung tragen. Man braucht dadurch keine zusätzlichen Träger für die Magnete.

Alternativ besteht auch die Möglichkeit, anstelle von Permanentmagneten schaltbare Magnete einzusetzen.

Selbstverständlich liegt es auch im Rahmen der Erfindung, dass der Magnethalter einen an sich bekannten Verstellmechanismus aufweist, der ein synchrones Verstellen der Finger auf den gewünschten Teilkreis bei gleichzeitiger Variation der Fingerzahl bewirkt.

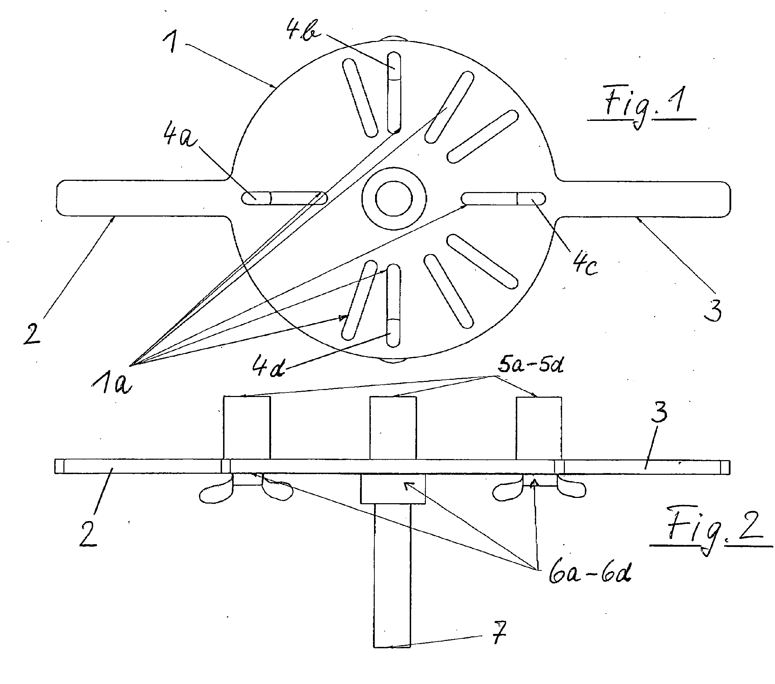

Weitere Merkmale und Vorteile der Erfindung ergeben sich aus der nachfolgenden Beschreibung eines Ausführungsbeispieles anhand der Zeichnung; dabei zeigt
- Fig. 1: eine Draufsicht auf einen vereinfachten Magnethalter;
- Fig. 2: eine Seitenansicht von Fig. 1;
- Fig. 3: eine Schrägansicht eines verbesserten Magnethalters;
- Fig. 4: den gleichen Magnethalter mit einer alternativen Griffausbildung und
- Fig. 5: den Magnethalter gemäß Fig. 4 mit aufgesetztem Messkopf.

Der Magnethalter besteht aus einer kreisförmigen Grundplatte 1, die an zwei gegenüberliegenden Seiten mit zwei Griffen 2 und 3 versehen ist. Die Grundplatte 1 hat eine Vielzahl von über den Umfang verteilten Längsschlitzen 1a, die radial ausgerichtet sind und deren Position auf das Lochmuster der gängigen Fahrzeugräder abgestimmt ist. Es geht dabei zum einen darum, dass Felgen mit drei, vier oder fünf Löchern verwendet werden können, zum anderen darum, dass die Löcher auf unterschiedlichen Durchmessern liegen.

Im Ausführungsbeispiel ist die Grundplatte 1 für eine Vier-Loch-Felge vorbereitet, sie ist also mit vier Fingern 4a, 4b, 4c und 4d bestückt, die jeweils um 90 Grad versetzt sind.

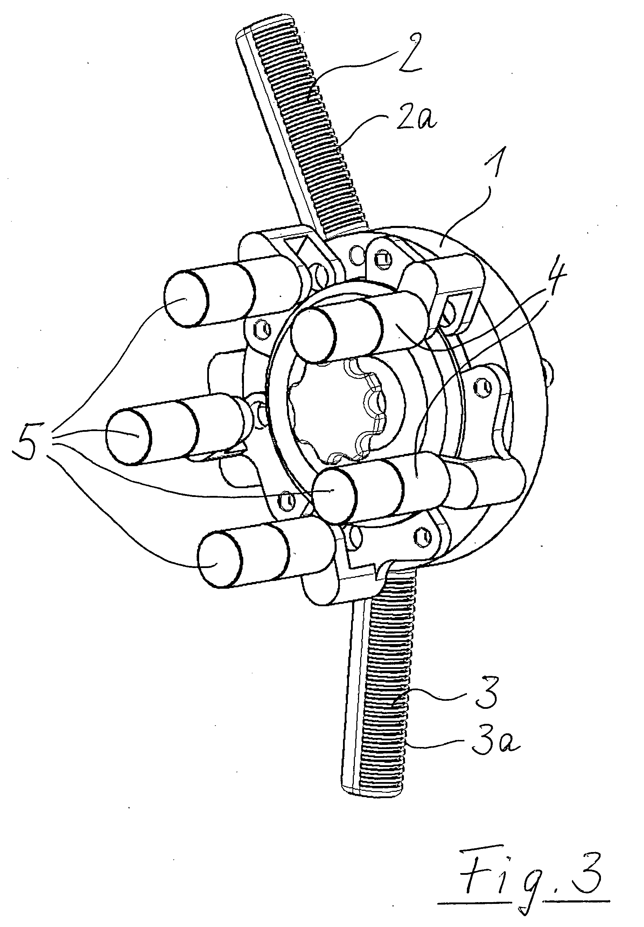

Wie man in Figur 2 erkennt, bestehen die genannten Finger praktisch durchgehend aus Stabgreifer-Magneten 5a, 5b, 5c, 5d, die an ihrem freien Ende, und zwar an ihrer kreisförmigen, planen Stirnseite den Magnet-Dipol aufweisen, wogegen sie an ihrem der Grundplatte zugewandten Ende jeweils in einem der Schlitze 1 a fixiert sind. Dazu weisen die Stabgreifer-Magnete an diesem Ende eine Gewindebohrung auf, in der eine passende Flügelschraube 6a, 6b, 6c, 6d oder dergleichen sitzt, die den Schlitz 1a durchquert und von der den Stabmagneten gegenüber liegenden Seite der Grundplatte 1 angezogen bzw. gelöst werden kann. Wesentlich dabei ist, dass die Stabgreifer-Magnete in den Schlitzen 1a in die zum Lochmuster der Felge passende Position verschoben und sodann an der Grundplatte fixiert werden, so dass sie in der Lage sind, das gesamte Gewicht des Messkopfes auf die Radmuttern oder Radschrauben zu übertragen, ohne dass die Grundplatte einer weiteren Befestigung an der Felge oder am Reifen bedarf.

Die Zugkraft pro Magnet beträgt ca. 300 N bis ca. 500 N, so dass eine äußerst stabile Magnetverbindung erzeugt wird.

Wie Fig. 2 weiter zeigt, enthält die Grundplatte in ihrem Zentrum einen üblichen Haltebolzen 7 oder andere passende Anschlussteile, um den nicht dargestellten Messkopf mit der Grundplatte zu verbinden.

Wesentlich sind die Handgriffe 2 und 3, weil sie das Abziehen der Grundplatte und die Überwindung der Magnetkräfte gestatten, wenn der Messvorgang beendet ist. Dazu sind die beiden Handgriffe radial außerhalb des Radmutter-Kranzes angeordnet, damit man ein starkes Hebelmoment auf die Grundplatte 1 im Sinne einer einseitigen Kippbewegung ausüben kann. Im Ausführungsbeispiel verlaufen die Handgriffe 2 und 3 radial nach außen, aber sie könnten selbstverständlich statt dessen auch in Umfangsrichtung verlaufen. Auch müssen sie nicht in der Ebene der Grundplatte 1 angeordnet sein, sondern könnten ihr gegenüber versetzt sein.

Vorstehend wurde die Erfindung an einer relativ einfachen Montagevorrichtung beschrieben, bei der die Finger bzw. die Stabgreifer-Magnete jeweils von Hand in ihre Position gebracht und befestigt werden müssen. Selbstverständlich liegt es aber auch im Rahmen der Erfindung, die Stabgreifer-Magnete bei solchen Montagevorrichtungen zu verwenden, die einen Verstellmechanismus zum synchronen Einstellen der Finger auf die gewünschte Position und vorzugsweise auch zum gleichzeitigen Verriegeln in dieser Position aufweisen wie in Fig. 3 bis Fig. 5 dargestellt.

Die Figuren 3 bis 5 zeigen eine vervollkommnete Ausbildung des Magnethalters. Dabei ist an der Grundplatte 1 ein Verstellmechanismus angebracht, der durch zentrale Betätigung alle Magnete 4 - in diesem Ausführungsbeispiel fünf Magnete - gleichzeitig nach innen oder außen verschwenkt, um sie an den gewünschten Durchmesser, auf dem die Radschrauben bzw. Radmuttern angeordnet sind, anzupassen. Ein derartiger Verstellmechanismus ist an sich bekannt und wird daher nicht näher beschrieben.

Wesentlich ist aber noch, dass die Griffe 2 und 3 hier nicht einstückig an die Grundplatte 1 angeformt sind, sondern dass es sich hier um separate Griffe handelt. Dadurch können die Griffe einen ergonomisch günstigen, etwa runden Querschnitt aufweisen, vorzugsweise mit einem gummielastischen Überzug 2a bzw. 3a. Ihre Verbindung mit der Grundplatte 1 erfolgt zweckmäßig durch Verschrauben.

Aus ergonomischen Gründen sind die Griffe 2 und 3 hier nicht exakt gegenüberliegend angeordnet, sondern unter einem Winkel von etwa 145 ° bis etwa 165 ° in Umfangsrichtung.

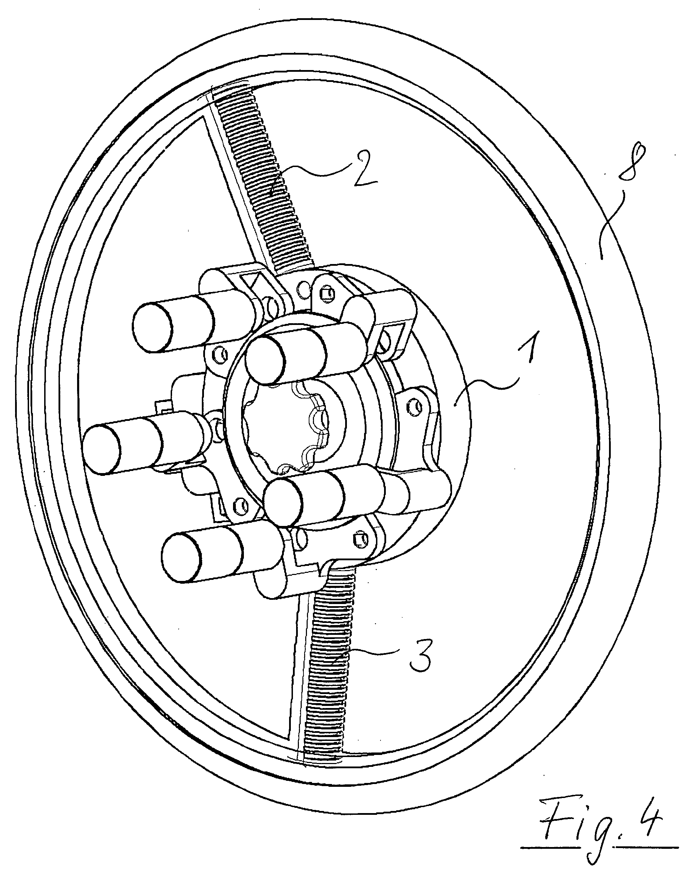

Figur 4 zeigt nahezu die gleiche Konstruktion für den Magnethalter; hier sind jedoch die annähernd radial nach außen laufenden Griffe 2 und 3 an ihren äußeren Enden noch durch einen umlaufenden Griffring 8 verbunden. Ein solcher Griffring bietet den Vorteil, dass unabhängig von der Drehstellung des zu messenden Rades und damit auch unabhängig von der Drehstellung der Griffe 2 und 3 der Benutzer stets an der ihm ergonomisch am günstigsten liegenden Position den Griff 8 fassen kann, um das erforderliche Kippmoment zum Abziehen der Magnete zu erzeugen.

Damit der Magnethalter durch die Griffausbildung nicht zu teuer in der Herstellung wird, besteht eine zweckmäßige Weiterbildung der Erfindung darin, ein separates Griffrad mit Speichen zu verwenden und dieses Griffrad dann mit der Grundplatte 1 des Magnethalters zu verbinden.

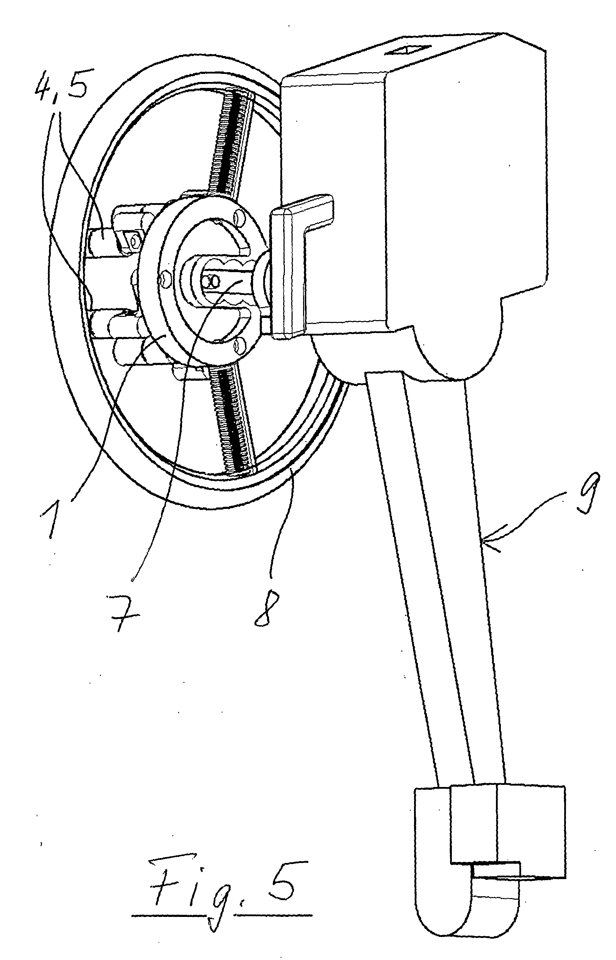

Figur 5 zeigt den Magnethalter gemäß Figur 4 von der anderen Seite und hier ergänzt durch den bisher nicht gezeigten Messkopf 9. Dieser Messkopf hat den an sich bekannten Aufbau. Er wird auf den bereits genannten Haltebolzen 7 aufgeschoben und dort in bekannter Weise gelagert, nachdem der Magnethalter 1 auf dem zu prüfenden Rad in seine Magnetverbindung gebracht worden ist.

Zusammenfassend besteht der Vorteil der Erfindung darin, dass man den Magnethalter allein über die Magnete an den Felgen bzw. den Radmuttern bzw. Radschrauben befestigt, dass die bisher notwendige Zentrierung oder zusätzliche Verspannung der Montagevorrichtung an der Felge oder am Reifen entfällt und dass die speziell angeordneten Griffe das Abziehen des Magnethalters aus seiner Magnetverbindung ermöglichen und erleichtern, so dass mit wesentlich höheren Magnetkräften als bisher gearbeitet werden kann.

## Patentansprüche

1. Magnethalter zur Montage eines Achsmesskopfes am Fahrzeugrad, wobei der Magnethalter zumindest drei Finger (4a, 4b, 4c, 4d) mit Magneten (5a, 5b, 5c, 5d) aufweist, die mit dem Rad, vorzugsweise den Radmuttern bzw. Radschrauben in Anlage bringbar sind und magnetisch daran haften,
**dadurch gekennzeichnet,**
**dass** der Magnethalter zumindest einen dezentral positionierten Griff (2, 3, 8) aufweist, der durch einseitiges Abkippen des Magnethalters sein Lösen aus der Magnetverbindung mit dem Rad bzw. den Radmuttern oder Radschrauben gestattet.

2. Magnethalter nach Anspruch 1,
**dadurch gekennzeichnet,**
**dass** der zumindest eine Griff (2, 3, 8) radial außerhalb des Radmutter- bzw. Radschrauben-Kranzes angeordnet ist.

3. Magnethalter nach Anspruch 1,
**dadurch gekennzeichnet,**
**dass** der zumindest eine Griff (2, 3, 8) am äußeren Rand des Magnethalters angeordnet ist.

4. Magnethalter nach Anspruch 1,
**dadurch gekennzeichnet,**
**dass** der zumindest eine Griff (2, 3, 8) etwa senkrecht zur Radachse verläuft.

5. Magnethalter nach Anspruch 1,
**dadurch gekennzeichnet,**
**dass** der zumindest eine Griff (2, 3) ausfahrbar, insbesondere teleskopartig ausfahrbar, am Magnethalter gelagert ist.

6. Magnethalter nach Anspruch 1,
**dadurch gekennzeichnet,**
**dass** der zumindest eine Griff (2, 3) eine gummielastische Ummantelung (2a, 3a) aufweist.

7. Magnethalter nach Anspruch 1,
**dadurch gekennzeichnet,**
**dass** zwei Griffe (2, 3) an etwa gegenüberliegenden Seiten des Magnethalters angeordnet sind.

8. Magnethalter nach Anspruch 1,
**dadurch gekennzeichnet,**
**dass** mehrere Griffe (2, 3) vorgesehen sind, die an einen gemeinsamen, in Umfangsrichtung laufenden Rahmen, insbesondere einen Ring (8) angeschlossen sind.

9. Magnethalter nach Anspruch 1,
**dadurch gekennzeichnet,**
**dass** die Finger (4a, 4b, 4c, 4d) Stabgreifer-Magnete (5a, 5b, 5c, 5d) aufweisen, insbesondere in zylindrischer Form und ihre Achse etwa parallel zur Radachse verläuft.

10. Magnethalter nach Anspruch 1,
**dadurch gekennzeichnet,**
**dass** die Magnete (5a, 5b, 5c, 5d) aus einer chemischen Verbindung von Neodym, Eisen und Bohr bestehen und insbesondere an ihrem dem Rad zugewandten Ende ihren Dipol aufweisen.

11. Magnethalter nach Anspruch 1,
**dadurch gekennzeichnet,**
**dass** er einen Verstellmechanismus zum synchronen Verstellen der Magnete (5a, 5b, 5c, 5d) auf gewünschte Positionen aufweist, gegebenenfalls bei gleichzeitiger Variation der Magnet-Anzahl.

12. Magnethalter nach Anspruch 1,
**dadurch gekennzeichnet,**
**dass** er an seinen den Magneten (5a, 5b, 5c, 5d) abgewandten Seite eine Halterung (7) zur lösbaren Aufnahme eines Achsmesskopfes (9) trägt und diese Halterung (7) in einer Führung des Magnethalters etwa quer zur Radachse verstellbar, aber fixierbar gelagert ist.
